# EUROPEAN PATENT APPLICATION

(11) **EP 3 425 888 A1**
(43) Date of publication of application: **09.01.2019**
(21) Application number: 17179647.7
(22) Date of filing: 04.07.2017
(51) Int. Cl.: H04M 1/60, H04M 1/725

(54) **METHOD AND SYSTEM FOR ENHANCED ROAD SAFETY OF A VEHICLE AND ITS OCCUPANTS BY MEANS OF AT LEAST PARTLY MODIFYING, ESPECIALLY INHIBITING OR LOCKING, AT LEAST ONE FUNCTIONALITY OF A MOBILE COMMUNICATION DEVICE WITHIN THE VEHICLE, PHONE RESTRICTION DEVICE FOR ENHANCED ROAD SAFETY OF A VEHICLE AND ITS OCCUPANTS BY MEANS OF AT LEAST PARTLY MODIFYING, ESPECIALLY INHIBITING OR LOCKING, AT LEAST ONE FUNCTIONALITY OF A MOBILE COMMUNICATION DEVICE WITHIN THE VEHICLE, USE OF A PHONE RESTRICTION APPLICATION, PROGRAM AND COMPUTER PROGRAM PRODUCT**

(71) Applicant: Deutsche Telekom AG, 53113 Bonn (DE)
(72) Inventor: Sid Ali, Badie, 53171 Bonn (DE)
(74) Representative: Schwöbel, Thilo K.

(57) **Abstract**

The invention relates to a method for enhanced road safety of a vehicle and its occupants by means of at least partly modifying, especially inhibiting or locking, at least one functionality of a mobile communication device within the vehicle,
wherein a phone restriction device is located within the vehicle, the phone restriction device comprising an interface module having a first interface, and a communication module having a second interface, the interface module being able to at least receive first communication data from a vehicle component of the vehicle using the first interface, and the communication module being able to at least transmit second communication data towards the mobile communication device using the second interface,
wherein the mobile communication device comprises a phone restriction application, the phone restriction application being enabled to at least receive, via the second interface, the second communication data from the communication module of the phone restriction device, wherein the method comprises the following steps:
-- in a first step, specific first communication data are transmitted from the vehicle component of the vehicle, using the first interface, to the interface module of the phone restriction device, and specific second communication data are transmitted from the communication module of the phone restriction device, using the second interface, to the phone restriction application of the mobile communication device,
-- in a second step, subsequent to the first step, the at least one functionality of the mobile communication device is modified, by the phone restriction application, in dependency of an indication of the specific second communication data received from the communication module of the phone restriction device.

## Description

### BACKGROUND

The present invention relates to a method for enhanced road safety of a vehicle and its occupants by means of at least partly modifying, especially inhibiting or locking, at least one functionality of a mobile communication device within the vehicle.

Furthermore, the present invention relates to a system for enhanced road safety of a vehicle and its occupants by means of at least partly modifying, especially inhibiting or locking, at least one functionality of a mobile communication device within the vehicle.

Additionally, the present invention relates to a phone restriction device for enhanced road safety of a vehicle and its occupants by means of at least partly modifying, especially inhibiting or locking, at least one functionality of a mobile communication device within the vehicle.

Furthermore, the present invention relates to the use of a phone restriction application on a mobile communication device for enhanced road safety of a vehicle and its occupants by means of at least partly modifying, especially inhibiting or locking, at least one functionality of the mobile communication device within the vehicle by means of using an inventive phone restriction device.

Still furthermore, the present invention relates to a program and a computer program product for enhanced road safety of a vehicle and its occupants by means of at least partly modifying, especially inhibiting or locking, at least one functionality of a mobile communication device within the vehicle.

One important reason of fatal road traffic accidents is the usage of mobile phones within cars. In addition to the traditional use of phones like phone calls and SMS, eMails, nowadays, new uses that adds up to the distractions, like games, selfies, etc. ... Today various methods and preventions are used to reduce the number of accidents caused by the use of mobile phones in connection with the use of vehicles, especially the use of mobile phones by drivers of vehicles. These measures are mainly introduced into more strict rules and police control. Regardless of the efforts used by the authorities to control the situations and ensure the safety of the passengers, the phenomena still persists, and with the technological advances, is making it more and more difficult to the drivers not to be distracted.

### SUMMARY

An object of the present invention is to provide a method, a system and a phone restriction device for enhanced road safety of a vehicle and its occupants such that the safety level is increased and the user-convenience improved.

The object of the present invention is achieved by a method for enhanced road safety of a vehicle and its occupants by means of at least partly modifying, especially inhibiting or locking, at least one functionality of a mobile communication device within the vehicle, wherein a phone restriction device is located within the vehicle, the phone restriction device comprising an interface module having a first interface, and a communication module having a second interface, the interface module being able to at least receive first communication data from a vehicle component of the vehicle using the first interface, and the communication module being able to at least transmit second communication data towards the mobile communication device using the second interface, wherein the mobile communication device comprises a phone restriction application, the phone restriction application being enabled to at least receive, via the second interface, the second communication data from the communication module of the phone restriction device, wherein the method comprises the following steps:
-- in a first step, specific first communication data are transmitted from the vehicle component of the vehicle, using the first interface, to the interface module of the phone restriction device, and specific second communication data are transmitted from the communication module of the phone restriction device, using the second interface, to the phone restriction application of the mobile communication device,
-- in a second step, subsequent to the first step, the at least one functionality of the mobile communication device is modified, by the phone restriction application, in dependency of an indication of the specific second communication data received from the communication module of the phone restriction device.

According to the present invention, it is thereby advantageously possible - by means of both the phone restriction device, being located within the vehicle, and the phone restriction application of or within the mobile communication device - to reduce the number of traffic accidents caused by the use of mobile phones or mobile communication devices inside cars. Hence, it is advantageously possible that, by means of implementing the present invention, to provide more safety and implement at least a modification of the functionality of mobile phones or mobile communication devices within cars (especially inhibiting or locking at least one functionality of the mobile phone or mobile communication device within the vehicle), but especially a total prohibition of the usage of mobile phones or mobile communication devices, especially for texting, social media means and selfies while driving.

According to the present invention, it is especially advantageous that the driver is able to still be connected and receive emails, SMS, as well as keep track of all phone calls received. No network restriction or signal interruption is used to allow the eCall introduced by the EU to run normally in the car.

According to a preferred embodiment of the present invention, it is proposed that, by means of the specific first communication data, a first indication is transmitted, the first indication corresponding to at least one out of the following:
-- an insertion or activation of a key of the vehicle in view of driving the vehicle,
-- a start of an engine of the vehicle,
-- a preparation to drive the vehicle,
-- a velocity of the vehicle above a predetermined velocity threshold,
and wherein, by means of the specific second communication data, a second indication is transmitted, the second indication corresponding either to the first indication or corresponding to at least one out of the following:
-- an indication to lock or to inhibit a functionality of the mobile communication device, especially a telephony functionality and/or a text messaging functionality and/or a camera functionality,
-- an indication to auto-reject incoming phone calls and/or to send a default text message,
-- an indication to activate a shortrange data transmission functionality - especially a bluetooth functionality - on the mobile communication device,
-- an indication to connect and/or to synchronize with the vehicle component or with a dashboard component of the vehicle,
-- an indication to allow emergency calls.

According to the present invention it is thereby advantageously possible that by means of the specific first communication data transmitting the first indication, and by means of the specific second communication data transmitting the second indication, the second indication corresponding to the first indication, the interpretation of the specific first communication data is performed at or by the mobile phone or the mobile communication device. This means that especially the decision which (vehicle) event, detected by the vehicle component, leads to which inhibition or modification of functionalities of the mobile phone or mobile communication device is taken at or by the mobile phone or mobile communication device. Alternatively, in case that the second indication does not correspond to the first indication, the interpretation of the specific first communication data is performed at or by the phone restriction device. This means that especially the decision which (vehicle) event, detected by the vehicle component, leads to which inhibition or modification of functionalities of the mobile phone or mobile communication device is taken at or by the phone restriction device.

According to a preferred embodiment of the present invention, in a third step, an acknowledgement information regarding the at least one functionality of the mobile communication device being modified - by the phone restriction application, and in dependency of the indication of the specific second communication data - is received by the phone restriction device and/or by the vehicle component and/or by the dashboard component, wherein especially a start of an engine of the vehicle and/or a preparation to drive the vehicle is locked or inhibited in the absense of the acknowledgment information being received by the phone restriction device and/or by the vehicle component and/or by the dashboard component.

By means of receiving, by the phone restriction device and/or by the vehicle component and/or by the dashboard component, of an acknowledgement information regarding the at least one functionality of the mobile communication device being modified, it is advantageously possible to provide an enhanced level of safety and security.

According to a preferred embodiment of the present invention, by means of the specific first communication data, a third indication is transmitted, the third indication corresponding to at least one out of the following:
-- a stop of an engine of the vehicle,
-- a completion to drive the vehicle,
-- a velocity of the vehicle below a predetermined further velocity threshold,
and wherein, by means of the specific second communication data, a fourth indication is transmitted, the fourth indication corresponding either to the third indication or corresponding to at least one out of the following:
-- an indication to unlock or to enable a functionality of the mobile communication device, especially a telephony functionality and/or a text messaging functionality and/or a camera functionality,
-- an indication to accept the reception of incoming phone calls,
-- an indication to deactivate a shortrange data transmission functionality - especially a bluetooth functionality - on the mobile communication device,
-- an indication to disconnect with the vehicle component or with a dashboard component of the vehicle.

According to the present invention it is thereby advantageously possible that by means of the specific first communication data transmitting the third indication, and by means of the specific second communication data transmitting the fourth indication, the fourth indication corresponding to the third indication, the interpretation of the specific first communication data is performed at or by the mobile phone or the mobile communication device. This means that especially the decision which (vehicle) event, detected by the vehicle component, leads to which inhibition or modification of functionalities of the mobile phone or mobile communication device is taken at or by the mobile phone or mobile communication device. Alternatively, in case that the fourth indication does not correspond to the third indication, the interpretation of the specific first communication data is performed at or by the phone restriction device. This means that especially the decision which (vehicle) event, detected by the vehicle component, leads to which inhibition or modification of functionalities of the mobile phone or mobile communication device is taken at or by the phone restriction device.

According to a preferred embodiment of the present invention, in a fourth step, specific third communication data are transmitted from the vehicle component of the vehicle, using the first interface, to the interface module of the phone restriction device, and specific fourth communication data are transmitted from the communication module of the phone restriction device, using the second interface, to the phone restriction application of the mobile communication device, wherein by means of the specific third communication data, a third indication is transmitted, the third indication corresponding to at least one out of the following:
-- a stop of an engine of the vehicle,
-- a completion to drive the vehicle,
-- a velocity of the vehicle below a predetermined further velocity threshold,
and wherein, by means of the specific fourth communication data, a fourth indication is transmitted, the fourth indication corresponding either to the third indication or corresponding to at least one out of the following:
-- an indication to unlock or to enable a functionality of the mobile communication device, especially a telephony functionality and/or a text messaging functionality and/or a camera functionality,
-- an indication to accept the reception of incoming phone calls,
-- an indication to deactivate a shortrange data transmission functionality - especially a bluetooth functionality - on the mobile communication device,
-- an indication to disconnect with the vehicle component or with a dashboard component of the vehicle.

According to a preferred embodiment of the present invention, the phone restriction device comprising - besides the interface module, and the communication module - a signal jammer or passive blocker module, the signal jammer or passive blocker module being able prohibit any usage of the mobile communication device, at least within a certain operating range of between 60 cm and 150 cm, preferably between 80 cm to 90 cm, around the phone restriction device or in the vicinity of a driver's seat of the vehicle.

By means of using the signal jammer or passive blocker module - being able to prohibit any usage of the mobile phone or mobile communication device within a certain operating range around the phone restriction device or in the vicinity of a driver's seat of the vehicle, especially between 60 cm and 150 cm around the phone restriction device, preferably between 80 cm to 90 cm around the phone restriction device - it is advantageously possible to provide a restriction area of restricted use of the mobile phone or mobile communication device in order to restrict the use of the mobile phone or mobile communication device for the driver of the vehicle.

According to a preferred embodiment of the present invention, the phone restriction device is enabled to allow a normal usage of mobile phones or other mobile communication devices on any back seats of the vehicle and/or on the passenger's seat of the vehicle.

It is thereby advantageously possible - while restricting or modifying the use of the mobile phone or mobile communication device for the driver of the vehicle - to allow the use of mobile phones or mobile communication devices for passengers, especially in the back seats of the vehicle.

According to a preferred embodiment of the present invention, the first step and/or the second step involves the establishment and/or the activation of a shortrange radio connection between the phone restriction device and the phone restriction application of the mobile communication device,
and/or wherein the first step and/or the second step involves an attach procedure between the phone restriction device and the phone restriction application of the mobile communication device.

It is thereby advantageously possible to easily transmit the relevent information based on a shortrange radio connection.

The present invention also relates to a system for enhanced road safety of a vehicle and its occupants by means of at least partly modifying, especially inhibiting or locking, at least one functionality of a mobile communication device within the vehicle, the system comprising a phone restriction device being located within the vehicle and/or built into the vehicle, and a phone restriction application within or installed on the mobile communication device, wherein the phone restriction device comprises an interface module having a first interface, and a communication module having a second interface, the interface module being able to at least receive first communication data from a vehicle component of the vehicle using the first interface, and the communication module being able to at least transmit second communication data towards the mobile communication device using the second interface, wherein the phone restriction application is enabled to at least receive, via the second interface, second communication data from the communication module of the phone restriction device, wherein the system is configured such that:
-- specific first communication data are transmitted from the vehicle component of the vehicle, using the first interface, to the interface module of the phone restriction device, and specific second communication data are transmitted from the communication module of the phone restriction device, using the second interface, to the phone restriction application of the mobile communication device, and
-- the at least one functionality of the mobile communication device is modified, by the phone restriction application, in dependency of an indication of the specific second communication data received from the communication module of the phone restriction device.

According to the present invention it is thereby advantageously possible to reduce the number of traffic accidents caused by the use of mobile phones or mobile communication devices inside cars.

Furthermore, the present invention relates to a phone restriction device for enhanced road safety of a vehicle and its occupants by means of at least partly modifying, especially inhibiting or locking, at least one functionality of a mobile communication device within the vehicle, the phone restriction device being locatable within the vehicle and/or built into the vehicle, wherein the phone restriction device comprises an interface module having a first interface, and a communication module having a second interface, the interface module being able to at least receive first communication data from a vehicle component of the vehicle using the first interface, and the communication module being able to at least transmit second communication data towards the mobile communication device using the second interface, wherein the mobile communication device comprises or is usable with a phone restriction application, the phone restriction application being enabled to at least receive, via the second interface, second communication data from the communication module of the phone restriction device, wherein the phone restriction device is configured such that:
-- specific first communication data are received, using the first interface, by the interface module of the phone restriction device from the vehicle component of the vehicle, and specific second communication data are transmitted from the communication module of the phone restriction device, using the second interface, to the phone restriction application of the mobile communication device, and
-- the at least one functionality of the mobile communication device is modified, by the phone restriction application, in dependency of an indication of the specific second communication data transmitted by the communication module of the phone restriction device.

Additionally, the present invention also relates to the use of a phone restriction application on a mobile communication device for enhanced road safety of a vehicle and its occupants by means of at least partly modifying, especially inhibiting or locking, at least one functionality of the mobile communication device within the vehicle by means of using an inventive phone restriction device.

Furthermore, the present invention relates to a program comprising a computer readable program code which, when executed on a computer or on a phone restriction device or on a mobile communication device or in part on a phone restriction device and in part on a mobile communication device, causes the computer or the phone restriction device or the mobile communication device to perform a method according to the present invention.

Furthermore, the present invention relates to a computer program product for for enhanced road safety of a vehicle and its occupants by means of at least partly modifying, especially inhibiting or locking, at least one functionality of a mobile communication device within the vehicle, the computer program comprising program code which, when executed on a computer or on a phone restriction device or on a mobile communication device or in part on a phone restriction device and in part on a mobile communication device, causes the computer or the phone restriction device or the mobile communication device to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a vehicle with mobile phone or mobile communication device, wherein a phone restriction device and a dashboard device is located within the vehice.
Figure 2 schematically illustrates a block diagram of different components of the inventive system, comprising the vehicle, the phone restriction device, and the mobile communication device.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

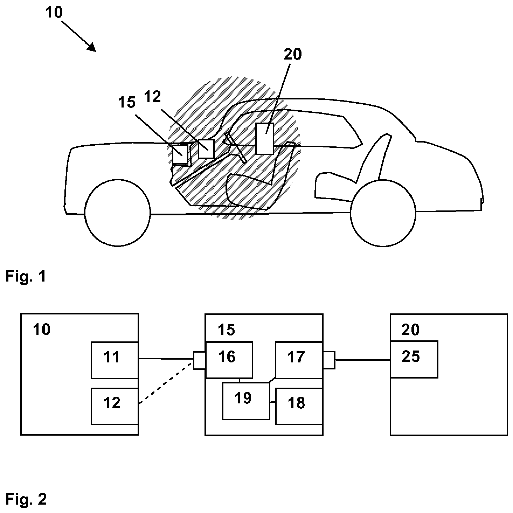

In Figure 1, a vehicle 10 with mobile phone or mobile communication device 20 is schematically shown, wherein a phone restriction device 15 and a dashboard device 12 is located within the vehice 10. According to the present invention, the modification of functionalities of the mobile communication device 20, especially the inhibition or the locking of such functionalities, within the vehicle 10, is performed using the phone restriction device 15 and a phone restriction application 25 (not specifically shown in Figure 1) within the mobile phone or mobile communication device 20. The phone restriction device 15 is typically a small device that is implemented in the car or the vehicle 10 either built-in or brought in (e.g. OBD2). The phone restriction application 25 is either originally available (i.e. built-in) on the mobile phone or mobile communication device 20, or it is installed on the mobile phone or mobile communication device 20, especially in case that the mobile communication device 20 is a smart phone, or phablet or tablet computer. The phone restriction device 15 typically has an operation range of about half a meter up to about one and a half meter in order to cover the area around a driver of the vehicle 10. The operation range is schematically indicated in Figure 1 by means of a hatched area, especially around the phone restriction device 15.

In Figure 2, a block diagram of different components of the inventive system, comprising the vehicle 10, the phone restriction device 15, and the mobile phone or mobile communication device 20 is schematically represented. According to the present invention, the functionality of a mobile phone or a mobile communication device 20 is at least partly either modified but especially inhibited or locked by means of the phone restriction device 15 in combination with the phone restriction application 25 present (or active) on the mobile phone or mobile communication device 20. The phone restriction device 15 is located within the vehicle 10 and comprises an interface module 16 (having a first interface) and a communication module 17 (having a second interface, especially a wireless interface, especially a shortrange wireless interface such as a Bluetooth interface or another shortrange wireless interface). The interface module 16 is able to at least receive first communication data from a vehicle component 11 of the vehicle 10 using the first interface. The communication module 17 is able to at least transmit second communication data towards the mobile communication device 20 using the second interface. A dashboard component 12 is either present in addition to the vehicle component 11, or the dashboard component 12 corresponds to the vehicle component 11. The mobile communication device 20 comprises the phone restriction application 25, and the phone restriction application 25 is enabled to at least receive, via the second interface, first communication data from the communication module 17 of the phone restriction device 15.

The phone restriction device 15 additionally comprises a signal jammer or passive blocker module 18, and a computing module 19.

According to the present invention, in a first step specific first communication data are transmitted from the vehicle component 11 of the vehicle 10, using the first interface, to the interface module 16 of the phone restriction device 15, and specific second communication data are transmitted from the communication module 17 of the phone restriction device 15, using the second interface, to the phone restriction application 25 of the mobile communication device 20. Thereby, it is advantageously possible to transmit vehicular information - such as the insertion or activation of a key of the vehicle 10 in view of driving the vehicle 10, or a start of an engine of the vehicle 10, or a preparation to drive the vehicle 10, or a velocity of the vehicle 10 above a predetermined velocity threshold - to the phone restriction device 15. Based on the vehicular information, an action or a decision regarding at least one functionality of the mobile communication device 20 being modified is taken by either the phone restriction device 15 or the phone restriction application 25. If the action or decision is taken by the phone restriction application 25, the vehicular information is transmitted, as specific second communication data, to the mobile communication device 20 and/or to the phone restriction application 25 (within or running on the mobile communication device 20). If the action or decision is taken by the phone restriction device 15, a resulting command information is transmitted, as specific second communication data, to the phone restriction application 25 (within or running on the mobile communication device 20). In a second step, subsequent to the first step, at least one functionality of the mobile communication device 20 is modified, by the phone restriction application 25, in dependency of an indication of the specific second communication data received from the communication module 17 of the phone restriction device 15.

Especially, the communication module 17 of the phone restriction device 15 comprises DSRC (Dedicated Short Range Communication) or NFC (Near Field Communication) capabilities or corresponding compenents, in order to communicate with the phone restriction application 25, e.g. for purposes of synchronization as well as to send a "smart phone Lock" request to the application. The operation range is typically 80 to 90 cm, to allow a normal usage of mobile phones in the back seats of the vehicle 10.

Furthermore especially, the phone restriction device 15 comprises (optionallly) the signal jammer module or passive blocker 18, in order to prohibit any usage of mobile phones. Again the operation range is typically 80 to 90cm, in order to allow a normal usage of mobile phones in the back seats of the vehicle 10.

The phone restriction device 15 furthermore comprises the interface module 16 in order to allow a connection with the car or the vehicle 10, and especially get information when the car engine starts and stops.

The phone restriction device 15 furthermore comprises a computing module 19 in order to analyze and decide which of the above compenents to trigger and which action to take.

The phone restriction application 25 is preferably a smart phone application that is preferably able to be installed in any smart phone, such as, e.g., in smart phones running Android, iOS, Windows, BlackBerry or the like. The main functions of the phone restriction application 25 comprise but are not limited to:
-- Communicate with the phone restriction device 15 (PhR Hardware), as well as with a car communication module,
-- Lock/Unlock smart phones,
-- Activate Bleutooth on the smart phone,
-- Connect/Synchronize with the car dashboard using Bleutooth,
-- Allow normal receptions of emails & SMS in the background,
-- Allow emergency calls, e.g. 112,
-- Lock the Camera functionalities,
-- Auto Rejects phone calls,
-- Send SMS,
-- Allow a Callback option

According to the present invention, the phone restriction device 15 is installed inside the car or the vehicle 10, typically in the area of dashboard, and its operational range is typically 80 to 90 cm to allow a normal usage of mobile phones in the back seats of the car or vehicle 10.

The processing steps are as follows:
Processing step 1: Once the Car Key is insterted, the phone restriction device 15 is automatically activated. Then it scans and search for available phones (mobile communication devices 20) in the car or vehicle 10, or it tries to connect with the phone restriction application on the smart phone or mobile communication device 20.
Processing step 2: If no phone (or mobile communication device 20) is found within range (of the phone restriction device 15) in the car, a message will be diplayed in the dashboard stating that no phone is found in the car; the message can as well be a vocal or acustical message. The car or vehicle 10 then starts with "No Phone Onboard Modus". Preferably, the jammer or passive blocker module 18 in the phone restriction device 15 is automatically initiated. At the same time, the jammer or passive blocker module 18 will be automatically deactivated if any mobile (or mobile communication device 20) is peered using bluetooth with the car dashboard at a later stage. According to the present invention, it is also advantageously possible that the message (indicating that no mobile phone or mobile communication device 20 is seen or detected) can be considered as a reminder in case the driver forgot his or her phone or mobile communication device 20.
   If a smart phone (or mobile communication device 20) is found within the range of the phone restriction device 15, i.e. by the phone restriction application 25, the phone restriction device 15 sends a lock request to the phone or mobile communication device 20, and the phone restriction application 25 takes over and locks the smart phone. Especially, the phone restriction device 15 synchronizes and connects with phone restriction application 25 on the phone. Especially, the phone restriction device 15 then sends the following requests in the following order:
   -- Activate Bleutooth,
   -- Peer/Synchronize with car communication module in the dashboard,
   -- Lock Smart phone (i.e. restrict the mobile communication device 20).
   Once the mobile communication device 20 is locked, and only then the car engine can start. Especially, in case that the mobile phone or mobile communication device 20 is found, but fails to peer with the car dashboard or with the phone restriction device 15 - e.g. due to Bleutooth issues -, the car engine especially is not able to start.
Processing step 3: Once the bluetooth is activated and the phone restriction application 25 on the mobile phone or mobile communication device 20 synchronizes with the car communication module in the dashboard or the phone restriction device 15, it will automatically forward all calls to the car dashboard (or phone restriction device 15) and at the same time allows ongoing calls from car dashboard. Finally the smart phone is locked.
   The phone restriction application 25 on the mobile communication device 20 especially operates as fellows:
   -- Incoming SMS & emails:
      The phone restriction application 25 allows a normal receipt of SMS and emails in the background, however no alerts or notifications (e.g. sound, LED alerts, etc...) are provided. The smart phone or mobile communication device 20 stays with full black screen during all the lock period.
   -- Incoming Calls:
      In case of incoming calls, the phone call will be automatically be forwarded to the car dashboard. No phone calls can pass through the mobile communication device 20.
      Alternatively in case of incoming calls, the phone call will be automatically rejected; a message will be sent to the calling party, that the called person is driving and cannot take the call. At the same time a call back function is triggered and therewith, the calling party will be notified once the phone in unlocked
   -- Ongoing Calls:
      Only emmergency calls are allowed (e.g. 112).
   -- Fraud Case:
      In case a call is initiated in the back seat and the phone is moved to the front of the vehicle (i.e. the phone restriction area), the call will be automatically stopped.
   -- Calls from the car dashboard:
      The application has no impact on the calls from the car dashboard, and the calls can be performed normally.
Processing step 4: Once is the car stops and the engine is switched off, the smart phone will be unlocked and resumes its normal usage.

According to the present invention, a forced peering, by means of using the phone restriction device 15, of the mobile communication device 20 (if availble or located in the driving seat area of the vehicle 10) is performed - otherwise the car engine will not start.

After the peering with the car dashboard (or phone restriction device 15), the mobile phone (or mobile communication device 20) will be completely locked with a black screen during all the drving time, and the only service avaialble on the mobile phone is the Emergency Call botton.

According to the present invention, the driver is allowed full access to all allowed communication services while driving via the car dashboard, e.g. related to incoming and ongoing calls.

Other services like SMS, emails, etc. that can distract the driver and endanger his life and the life of others are fully running in the background without interruption but with no access for the driver.

## Claims

1. Method for enhanced road safety of a vehicle (10) and its occupants by means of at least partly modifying, especially inhibiting or locking, at least one functionality of a mobile communication device (20) within the vehicle (10),
wherein a phone restriction device (15) is located within the vehicle (10), the phone restriction device (15) comprising an interface module (16) having a first interface, and a communication module (17) having a second interface, the interface module (16) being able to at least receive first communication data from a vehicle component (11) of the vehicle (10) using the first interface, and the communication module (17) being able to at least transmit second communication data towards the mobile communication device (20) using the second interface, wherein the mobile communication device (20) comprises a phone restriction application (25), the phone restriction application (25) being enabled to at least receive, via the second interface, the second communication data from the communication module (17) of the phone restriction device (15), wherein the method comprises the following steps:
-- in a first step, specific first communication data are transmitted from the vehicle component (11) of the vehicle (10), using the first interface, to the interface module (16) of the phone restriction device (15), and specific second communication data are transmitted from the communication module (17) of the phone restriction device (15), using the second interface, to the phone restriction application (25) of the mobile communication device (20),
-- in a second step, subsequent to the first step, the at least one functionality of the mobile communication device (20) is modified, by the phone restriction application (25), in dependency of an indication of the specific second communication data received from the communication module (17) of the phone restriction device (15).

2. Method according to claim 1, wherein, by means of the specific first communication data, a first indication is transmitted, the first indication corresponding to at least one out of the following:
-- an insertion or activation of a key of the vehicle (10) in view of driving the vehicle (10),
-- a start of an engine of the vehicle (10),
-- a preparation to drive the vehicle (10),
-- a velocity of the vehicle (10) above a predetermined velocity threshold, and wherein, by means of the specific second communication data, a second indication is transmitted, the second indication corresponding either to the first indication or corresponding to at least one out of the following:
-- an indication to lock or to inhibit a functionality of the mobile communication device (20), especially a telephony functionality and/or a text messaging functionality and/or a camera functionality,
-- an indication to auto-reject incoming phone calls and/or to send a default text message,
-- an indication to activate a shortrange data transmission functionality - especially a bluetooth functionality - on the mobile communication device (20),
-- an indication to connect and/or to synchronize with the vehicle component (11) or with a dashboard component (12) of the vehicle (10),
-- an indication to allow emergency calls.

3. Method according to one of the preceding claims, wherein, in a third step, an acknowledgement information regarding the at least one functionality of the mobile communication device (20) being modified - by the phone restriction application (25), and in dependency of the indication of the specific second communication data - is received by the phone restriction device (15) and/or by the vehicle component (11) and/or by the dashboard component (12), wherein especially a start of an engine of the vehicle (10) and/or a preparation to drive the vehicle (10) is locked or inhibited in the absense of the acknowledgment information being received by the phone restriction device (15) and/or by the vehicle component (11) and/or by the dashboard component (12).

4. Method according to claim 1, wherein, by means of the specific first communication data, a third indication is transmitted, the third indication corresponding to at least one out of the following:
-- a stop of an engine of the vehicle (10),
-- a completion to drive the vehicle (10),
-- a velocity of the vehicle (10) below a predetermined further velocity threshold, and wherein, by means of the specific second communication data, a fourth indication is transmitted, the fourth indication corresponding either to the third indication or corresponding to at least one out of the following:
-- an indication to unlock or to enable a functionality of the mobile communication device (20), especially a telephony functionality and/or a text messaging functionality and/or a camera functionality,
-- an indication to accept the reception of incoming phone calls,
-- an indication to deactivate a shortrange data transmission functionality - especially a bluetooth functionality - on the mobile communication device (20),
-- an indication to disconnect with the vehicle component (11) or with a dashboard component (12) of the vehicle (10).

5. Method according to one of claims 1, 2 or 3, wherein, in a fourth step, specific third communication data are transmitted from the vehicle component (11) of the vehicle (10), using the first interface, to the interface module (16) of the phone restriction device (15), and specific fourth communication data are transmitted from the communication module (17) of the phone restriction device (15), using the second interface, to the phone restriction application (25) of the mobile communication device (20), wherein by means of the specific third communication data, a third indication is transmitted, the third indication corresponding to at least one out of the following:
-- a stop of an engine of the vehicle (10),
-- a completion to drive the vehicle (10),
-- a velocity of the vehicle (10) below a predetermined further velocity threshold, and wherein, by means of the specific fourth communication data, a fourth indication is transmitted, the fourth indication corresponding either to the third indication or corresponding to at least one out of the following:
-- an indication to unlock or to enable a functionality of the mobile communication device (20), especially a telephony functionality and/or a text messaging functionality and/or a camera functionality,
-- an indication to accept the reception of incoming phone calls,
-- an indication to deactivate a shortrange data transmission functionality - especially a bluetooth functionality - on the mobile communication device (20),
-- an indication to disconnect with the vehicle component (11) or with a dashboard component (12) of the vehicle (10).

6. Method according to one of the preceding claims, wherein the phone restriction device (15) comprising - besides the interface module (16), and the communication module (17) - a signal jammer or passive blocker module (18), the signal jammer or passive blocker module (18) being able prohibit any usage of the mobile communication device (20), at least within a certain operating range of between 60 cm and 150 cm, preferably between 80 cm to 90 cm, around the phone restriction device (15) or in the vicinity of a driver's seat of the vehicle (10).

7. Method according to one of the preceding claims, wherein the phone restriction device (15) is enabled to allow a normal usage of mobile phones or other mobile communication devices (20) on any back seats of the vehicle (10) and/or on the passenger's seat of the vehicle (10).

8. Method according to one of the preceding claims, wherein the first step and/or the second step involves the establishment and/or the activation of a shortrange radio connection between the phone restriction device (15) and the phone restriction application (25) of the mobile communication device (20),
and/or wherein the first step and/or the second step involves an attach procedure between the phone restriction device (15) and the phone restriction application (25) of the mobile communication device (20).

9. System for enhanced road safety of a vehicle (10) and its occupants by means of at least partly modifying, especially inhibiting or locking, at least one functionality of a mobile communication device (20) within the vehicle (10), the system comprising a phone restriction device (15) being located within the vehicle (10) and/or built into the vehicle (10), and a phone restriction application (25) within or installed on the mobile communication device (20), wherein the phone restriction device (15) comprises an interface module (16) having a first interface, and a communication module (17) having a second interface, the interface module (16) being able to at least receive first communication data from a vehicle component (11) of the vehicle (10) using the first interface, and the communication module (17) being able to at least transmit second communication data towards the mobile communication device (20) using the second interface,
wherein the phone restriction application (25) is enabled to at least receive, via the second interface, the second communication data from the communication module (17) of the phone restriction device (15), wherein the system is configured such that:
-- specific first communication data are transmitted from the vehicle component (11) of the vehicle (10), using the first interface, to the interface module (16) of the phone restriction device (15), and specific second communication data are transmitted from the communication module (17) of the phone restriction device (15), using the second interface, to the phone restriction application (25) of the mobile communication device (20), and
-- the at least one functionality of the mobile communication device (20) is modified, by the phone restriction application (25), in dependency of an indication of the specific second communication data received from the communication module (17) of the phone restriction device (15).

10. Phone restriction device (15) for enhanced road safety of a vehicle (10) and its occupants by means of at least partly modifying, especially inhibiting or locking, at least one functionality of a mobile communication device (20) within the vehicle (10), the phone restriction device (15) being locatable within the vehicle (10) and/or built into the vehicle (10), wherein the phone restriction device (15) comprises an interface module (16) having a first interface, and a communication module (17) having a second interface, the interface module (16) being able to at least receive first communication data from a vehicle component (11) of the vehicle (10) using the first interface, and the communication module (17) being able to at least transmit second communication data towards the mobile communication device (20) using the second interface,
wherein the mobile communication device (20) comprises or is usable with a phone restriction application (25), the phone restriction application (25) being enabled to at least receive, via the second interface, the second communication data from the communication module (17) of the phone restriction device (15), wherein the phone restriction device (15) is configured such that:
-- specific first communication data are received, using the first interface, by the interface module (16) of the phone restriction device (15) from the vehicle component (11) of the vehicle (10), and specific second communication data are transmitted from the communication module (17) of the phone restriction device (15), using the second interface, to the phone restriction application (25) of the mobile communication device (20), and
-- the at least one functionality of the mobile communication device (20) is modified, by the phone restriction application (25), in dependency of an indication of the specific second communication data transmitted by the communication module (17) of the phone restriction device (15).

11. Use of a phone restriction application (25) on a mobile communication device (20) for enhanced road safety of a vehicle (10) and its occupants by means of at least partly modifying, especially inhibiting or locking, at least one functionality of the mobile communication device (20) within the vehicle (10) by means of using a phone restriction device (15) according to claim 11.

12. Program comprising a computer readable program code which, when executed on a computer or on a phone restriction device (15) or on a mobile communication device (20) or in part on a phone restriction device (15) and in part on a mobile communication device (20), causes the computer or the phone restriction device (15) or the mobile communication device (20) to perform a method according to one of claims 1 to 8.

13. Computer program product for enhanced road safety of a vehicle (10) and its occupants by means of at least partly modifying, especially inhibiting or locking, at least one functionality of a mobile communication device (20) within the vehicle (10), the computer program product comprising a computer program stored on a storage medium, the computer program comprising program code which, when executed on a computer or on a phone restriction device (15) or on a mobile communication device (20) or in part on a phone restriction device (15) and in part on a mobile communication device (20), causes the computer or the phone restriction device (15) or the mobile communication device (20) to perform a method according to one of claims 1 to 8.
